# EUROPEAN PATENT SPECIFICATION

(11) **EP 2 520 417 B1**
(45) Date of publication and mention of the grant of the patent: **25.12.2013**
(21) Application number: 11165021.4
(22) Date of filing: 05.05.2011
(51) Int. Cl.: B29C 65/02, B65B 51/22, H05B 6/10, B29C 65/50, B65B 51/30

(54) **Induction sealing device for heat sealing packaging material for producing sealed packages of pourable food products**
Induktionsversiegelungsvorrichtung für Wärmeversiegelungsverpackungsmaterial zur Herstellung versiegelter Verpackungen für gießbare Lebensmittel
Dispositif de scellement par induction pour matériau de conditionnement thermoscellable pour produire des emballages scellés de produits alimentaires pouvant être versés

(43) Date of publication of application: 07.11.2012
(73) Proprietor: Tetra Laval Holdings & Finance S.A., 1009 Pully (CH)
(72) Inventor: Sighinolfi, Fabrizio, 41015 Nonantola (IT); Babini, Andrea, 41124 Modena (IT); Monari, Pietro, 41122 Modena (IT)
(74) Representative: Di Sciuva, Michele

(56) References cited:
- EP-A1- 0 387 512
- WO-A1-2009/144168
- US-A- 5 767 491
- US-A1- 2001 035 406

## Description

The present invention relates to an induction sealing device for heat sealing packaging material for producing sealed packages of pourable food products.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging machines, on which the tube is formed continuously from the web-fed packaging material. More specifically, the web of packaging material is unwound off a reel and fed through a station for applying a sealing strip of heat-seal plastic material, and through an aseptic chamber on the packaging machine, where it is sterilized, e.g. by applying a sterilizing agent such as hydrogen peroxide, which is subsequently evaporated by heating, and/or by subjecting the packaging material to radiation of appropriate wavelength and intensity.

The web of packaging material is then fed through a number of forming assemblies which interact with the packaging material to fold it gradually from strip form in a tube shape.

More specifically, a first portion of the sealing strip is applied to a first longitudinal edge of the packaging material, on the face of the material eventually forming the inside of the packages; and a second portion of the sealing strip projects from the first longitudinal edge.

The forming assemblies are arranged in succession, and comprise respective roller folding members defining a number of compulsory packaging material passages varying gradually in section from a C shape to a substantially circular shape.

On interacting with the folding members, the second longitudinal edge is laid on the outside of the first longitudinal edge with respect to the axis of the tube being formed. More specifically, the sealing strip is located entirely inside the tube, and the face of the second longitudinal edge facing the axis of the tube is superimposed partly on the second portion of the sealing strip, and partly on the face of the first longitudinal edge located on the opposite side to the first portion of the sealing strip.

Packaging machines of the above type are known in which the first and second longitudinal edge are heat sealed to form a longitudinal seal along the tube, which is then filled with the sterilized or pasteurized food product, and is sealed and cut along equally spaced cross sections to form pillow packs, which are then folded mechanically to form respective parallelepiped-shaped packages.

More specifically, the heat-seal operation comprises a first heating step to heat the second longitudinal edge without the sealing strip; and a second pressure step to compress the sealing strip and the longitudinal edges.

The first heating step melts the polyethylene layer of the second longitudinal edge, which transmits heat by conduction to the first longitudinal edge and the sealing strip, so as to melt the polyethylene layer of the first longitudinal edge and the heat-seal material of the sealing strip.

At the second pressure step, the tube is fed between a number of first rollers outside the tube, and at least one second roller inside the tube.

More specifically, the first rollers define a compulsory circular passage for the tube of packaging material, and have respective axes in a plane transversal to the path of the tube.

In the case of barrier material comprising a sheet of electrically conductive material, e.g. aluminum, the longitudinal seal may be formed by induction heat-sealing.

More specifically, the packaging machine comprises a sealing device which is wholly arranged outside the tube.

The sealing device substantially comprises one or more inductive elements electrically fed by a high-frequency alternate current generator.

In use, the alternate current flowing inside the inductive elements generates an alternate magnetic field flux which extends substantially transversal to the feeding direction of the tube.

This alternate magnetic field flux generates eddy currents in the aluminium layer to melt the heat-seal plastic material locally.

Sealing device is mounted above and is connected with the first rollers.

Though efficient, sealing device of the above type leave room for improvement.

A need is felt within the industry to improve uniformity of the heating and, therefore, of the longitudinal sealing, especially at the start-up of the packaging machine and/or when the longitudinal seal is performed in a region of the packaging material at which a new reel has been joined to an existing one.

In particular, the known inductive elements comprise a first and second leg within which alternate current flows in opposite directions.

The first leg is arranged in front of the sealing area defined by the overlapping regions of the first and second longitudinal edges and of the sealing strip whereas the second leg is spaced from such a sealing area.

Accordingly, only the first leg induces eddy currents within the sealing area whereas the second portion induces eddy current in a region of the packaging material which is spaced and far from the overlapping edges.

As a result, only the eddy currents generated by the first leg are effective in forming the longitudinal seal.

When a new reel of packaging material is joined to an existing one, the margins of respective aluminum layers are interrupted. In this case, there is the risk that the area close to the margins is not heated and, therefore, not completely sealed, by the known sealing device. In particular, the Applicant has found that eddy current tends to close far from the margins of the aluminum layers, so causing the incomplete sealing of the margins.

Moreover, the Applicant has found that eddy currents tend to create a cold spot within the sealing area and a hot spot outside the sealing area, so that the longitudinal sealing could be not perfect.

A need is also felt within the industry to obtain a heat pattern as uniform as possible in the sealing area.

EP-A-387512 discloses a heating induction sealing device, according to the preamble of claim 1.

It is an object of the present invention to provide an induction sealing device, designed to meet at least one of the above requirement in a straightforward, low-cost manner.

According to the present invention, there is provided an induction sealing device, for heat sealing packaging material for forming a seal in a packaging material, as claimed in Claim 1.

Furthermore, the present invention relates to a method of forming a seal in a packaging material, as claimed in claim 10.

A preferred, non-limiting embodiment of the present invention will be described by way of example with reference to the accompanying drawings, in which:
Figure 1 shows a packaging unit comprising a sealing device according to the present invention;
Figure 2 shows the sealing device of Figure 1 in an operative condition;
Figure 3 shows the sealing device of Figures 1 and 2 from a different visual angle and with parts removed for clarity;
Figures 4 and 5 show respective additional steps of the operation of the sealing device of Figure 1;
Figure 6 shows the heat sealing device of Figures 1 to 5, when disassembled;
Figure 7 shows a first side of some components of the sealing device of Figures 1 to 6, when disassembled;
Figure 8 shows a second side, opposite to first side, of the components of Figures 1 to 6, when disassembled;
Figures 9 and 10 show schematically electrical circuits of the sealing device of Figures 1 to 8 in respective different configurations;
Figures 11 and 12 are section along lines XI-XI and XII-XII respectively of Figure 8 and show constant magnetic field lines generated by the sealing device according to the present invention;
Figure 13 shows some components of the packaging machine of Figures 1 and 2; and
Figures 14 and 15 show the patterns of inducing and eddy currents in a known prior art inductive element and in an inductive element according to the invention respectively.

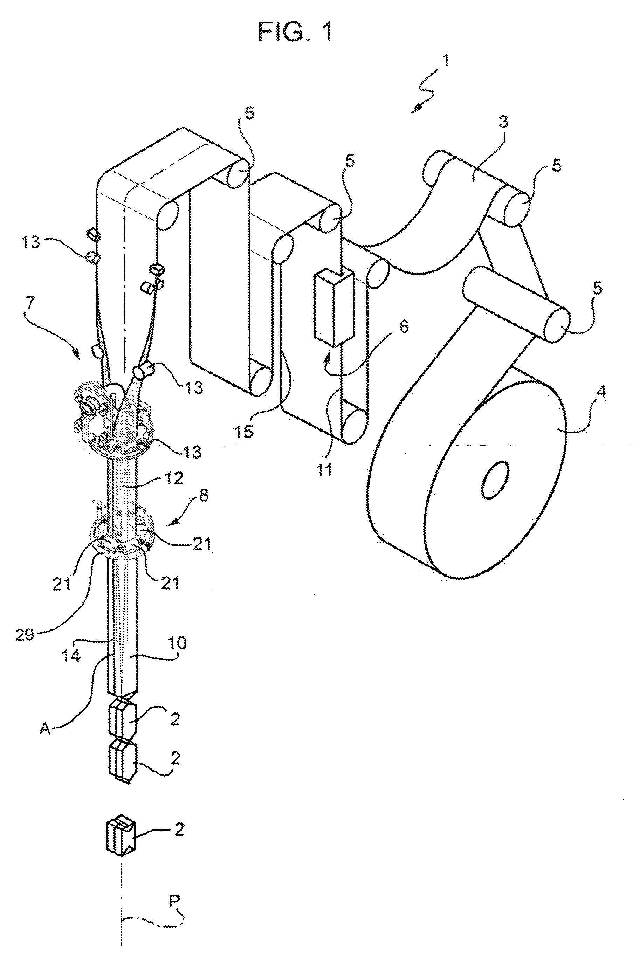

Number 1 in Figure 1 indicates as a whole a packaging machine for continuously producing sealed packages 2 of a food product from a web 3 of packaging material, which is unwound off a reel 4 and fed along a forming path P.

Machine 1 preferably produces sealed packages 2 of a pourable food product, such as pasteurized or UHT milk, fruit juice, wine, peas, beans, etc.

Machine 1 may also produce sealed packages 2 of a food product that is pourable when producing packages 2, and sets after packages 2 are sealed. One example of such a food product is a portion of cheese, that is melted when producing packages 2, and sets after packages 2 are sealed.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

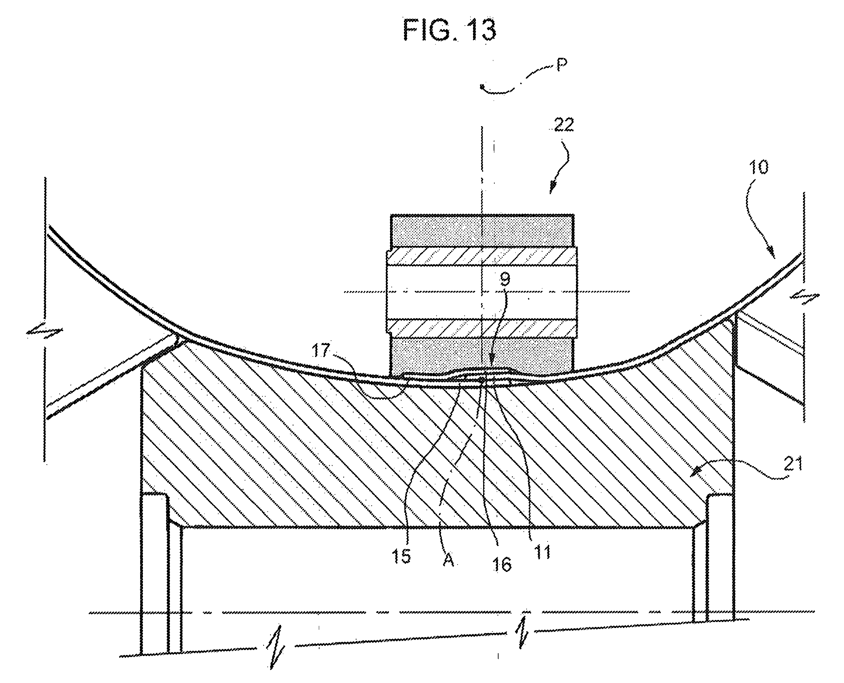

More specifically, web 3 is fed along path P by guide members 5, e.g. rollers or similar, and successively through a number of work stations, of which are shown schematically: a station 6 for applying a sealing strip 9 (shown enlarged in thickness in Figure 13 for the sake of clarity) to web 3; a forming station 7 for forming a tube 10 of packaging material; and a heat-sealing station 8 for forming a longitudinal seal 14 along tube 10. Seal 14 is continuous and extends along a direction A parallel to path P.

Machine 1 also comprises a fill device 12 for pouring the sterilized or sterile-processed food product continuously into tube 10 of packaging material; and a jaw-type forming assembly (not shown) for gripping, sealing, and cutting tube 10 along equally spaced cross sections to form a succession of packages 2.

More specifically, at station 6, a longitudinal edge 11, parallel to path P, of web 3 is first heated, e.g. by heat induction, to melt the plastic layer. Web 3 has a longitudinal edge 15 opposite edge 11 and also parallel to path P.

Next, a portion 16 (Figure 13) of strip 9 is first applied to the face of edge 11 eventually facing inwards of packages 2, while a further portion 17 of strip 9 projects from edge 11.

Finally, strip 9 is pressed onto longitudinal edge 11, e.g. by means of rollers not shown.

More specifically, sealing strip 9 is made of heat-seal plastic material.

Strip 9 prevents edge 11 from absorbing the food product once tube 10 and seal 14 of the tube are formed, and also provides for improving the gas-barrier performance and physical strength of seal 14.

Station 7 comprises a number of forming assemblies 13 arranged successively along path P, and which interact gradually with web 3 to fold it into the form of tube 10.

More specifically, forming assemblies 13 comprise respective numbers of rollers defining respective compulsory packaging material passages, the respective sections of which vary gradually from a C shape to a substantially circular shape.

More specifically, the axes of the rollers in each forming assembly 13 lie in a relative plane transversal, perpendicular in the embodiment shown, to path P.

Forming assemblies 13 gradually form tube 10, so that edge 15 is located outwards of edge 11 with respect to the axis of tube 10. More specifically, when forming tube 10, strip 9 is located inside tube 10, and the inner face of edge 15 is superimposed partly on portion 17 of strip 9, and partly on the outer face of edge 11 (Figure 13).

Station 8 comprises a heating induction sealing device 30 for heating edge 15 and locally melting the polyethylene layer of edge 15. Heat is transmitted by conduction from edge 15 to edge 11 and strip 9, so as to locally melt the polyethylene layer of edge 11 and the heat-seal material of strip 9.

Station 8 also comprises a number of forming rollers 21 defining a compulsory circular passage for tube 10; and one or more rollers 22 for pressing portion 17 of strip 9, and portion 16 of strip 9 and edge 11 onto the face of edge 15 inside tube 10, so that the polyethylene layers of edges 11, 15 and the heat-seal material of strip 9 blend completely to form the molecular bonds defining seal 14 of tube 10.

More specifically, rollers 21 are located outside tube 10, and pressure rollers 22 inside tube 10.

Station 8 also comprises an annular support 29 which surrounds tube 10 and support rollers 21.

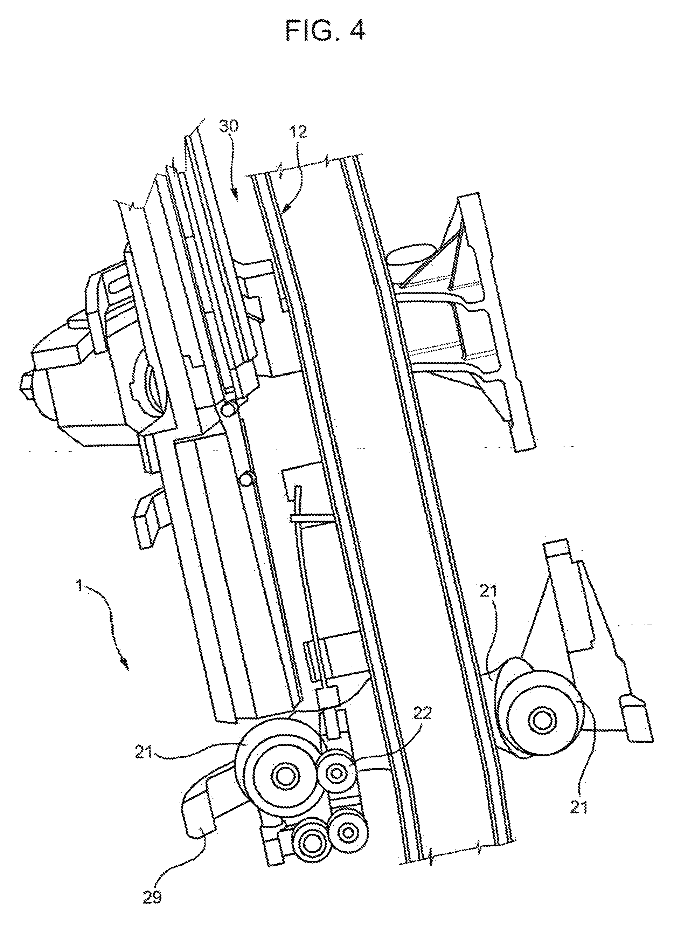

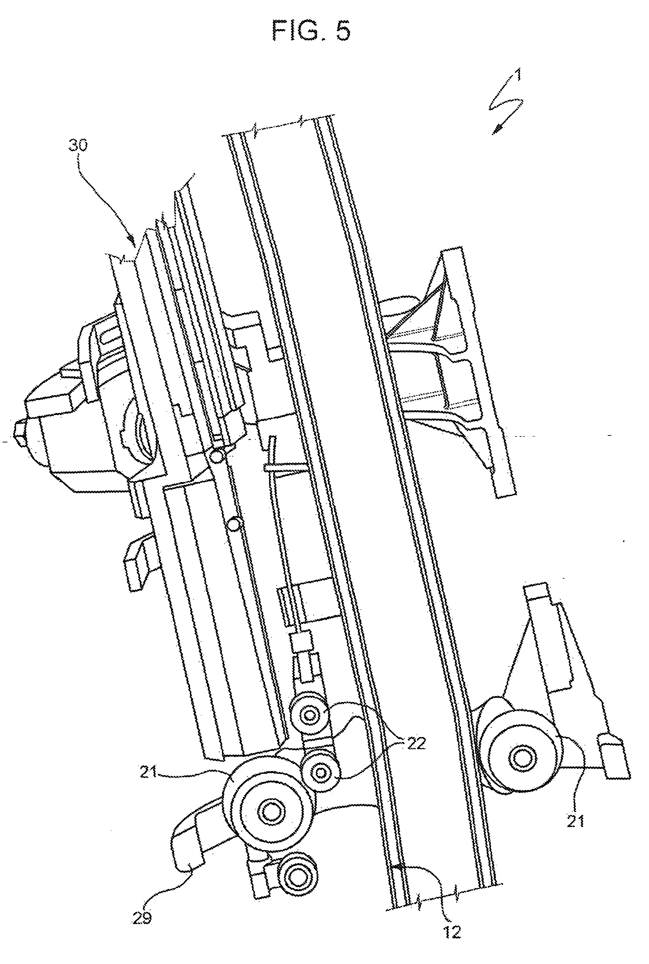

Sealing device 30 is, in particular, movable together with support 29 between a raised position and lowered position along a direction which is parallel to path P shown respectively in Figures 4 and 5.

Sealing device 30 comprises a pair of inductors 31, 32; inductor 31 comprises a portion 35 facing inductor 32 and defining with inductor 32 a passage 28 for edge 15, and a portion 36; sealing device 30 is selectively arrangeable in a first configuration, in which alternate currents flow within inductors 31, 32; portion 35 of inductor 31 and inductor 32 inductors 31, 32 are configured to generate a magnetic flux M1 transversally to direction A, when sealing device is arranged in the first configuration; portion 36 of inductor 31 is configured to generate a magnetic flux M2 having a main component transversal to path P, when sealing device 30 is arranged in the first configuration.

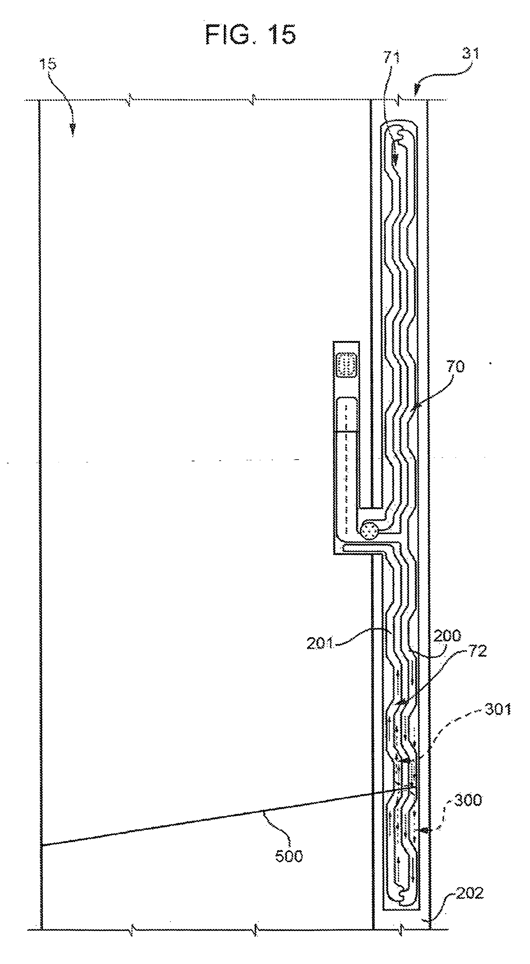

Portion 36 of inductor 31 comprises legs 200, 201 within which alternate current flows, in use, in opposite direction; leg 200 is configured to induce, in use, a portion 300 of eddy current (shown with a dashed line in Figure 15) within an area 202 of edge 15 to be sealed onto strip 9 and edge 11.

Legs 200, 201 faces each other along a direction C orthogonal to direction B.

Advantageously, leg 201 is configured to induce a portion 301 of eddy current within area 202 of edge 15 to be sealed onto strip 9 and edge 11; legs 200, 201 have a length along a direction B parallel to direction A and transversal to direction C; legs 200, 201 are nonsymmetrical relative to direction B, so that seal 14 is formed as continuous along direction C.

In this way, both legs 200, 201 of portion 36 of inductor 31 are effective in inducing respective portions 300, 301 of eddy current within area 202.

In other words, substantially the whole eddy current induced by portion 36 of inductor 31 circulate within area 202.

Furthermore, due to the nonsymmetrical shape of legs 200, 201, the pattern of eddy current and, therefore, the heat-pattern is very uniform within area 200.

In this way, the formation of a cold area, and therefore of a non-sealed region between legs 200, 201 is substantially prevented, so ensuring the continuity of seal 14 along direction C.

Sealing device 30 may be also selectively arranged in a second configuration, in which alternate current flows within portion 36 of inductor 31 only and no alternate current flows within inductor 32 and portion 35 of inductor 31.

When sealing device 30 is arranged in the second configuration, magnetic flux M1 is not generated and portion 36 generates only magnetic flux M2.

Portions 35, 36 define respectively the top and the bottom of relative inductor 31.

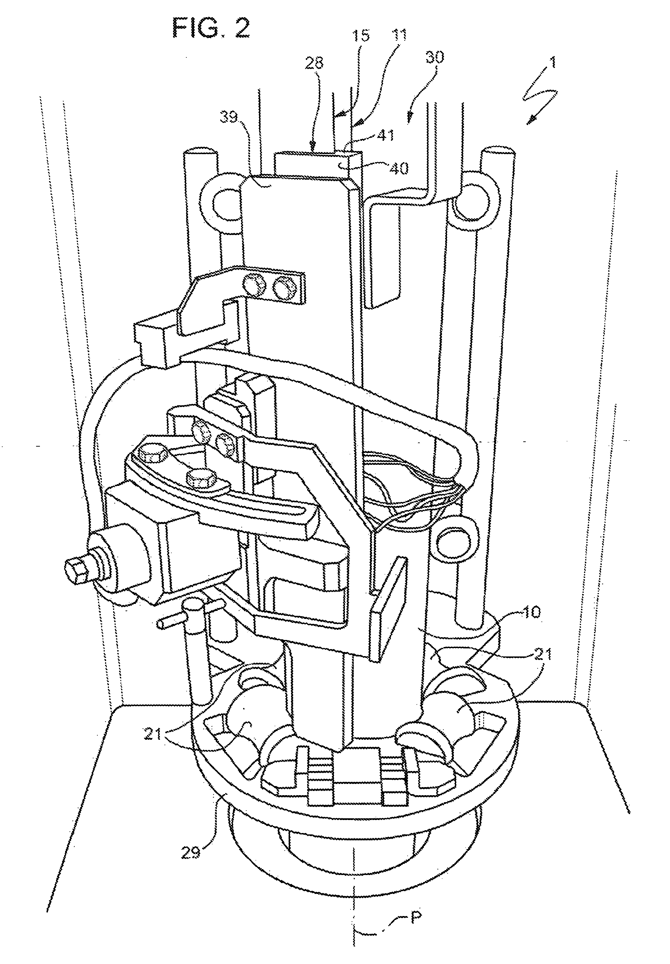

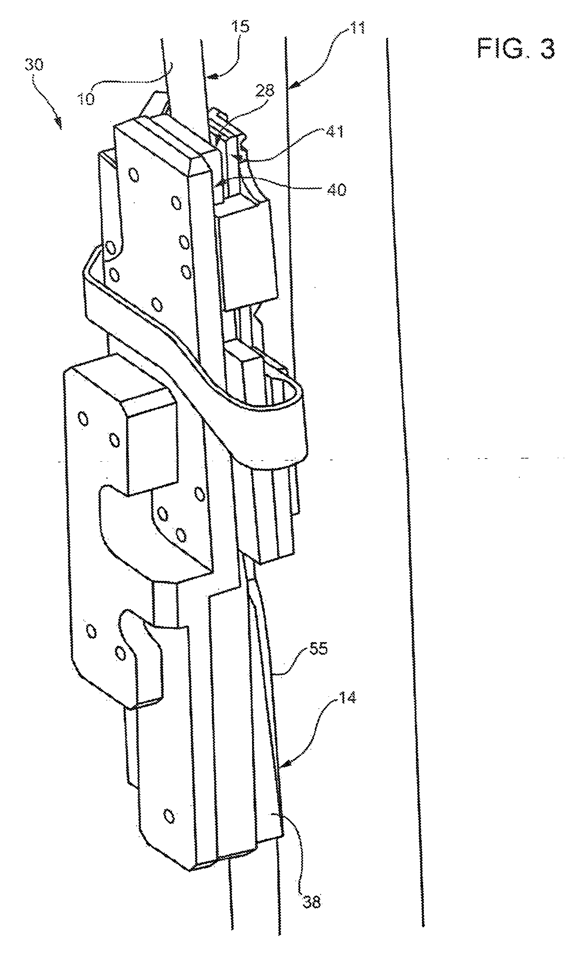

In detail, when edge 15 enters passage 28, it is still detached from edge 11 and strip 9 (see Figures 2 and 3 in which strip 9 is not shown).

Edge 15 overlaps edge 11 and strip 9 as it is fed in front of portion 36 of inductor 31.

Sealing device 30 substantially comprises (Figures 2, 3 and 6 to 8):
- a body 40 arranged outside tube 10; and
- a body 41 arranged on the inner side of tube 10.

Body 40, 41 are releasably connected to each other, in the embodiment shown through a plurality of screws.

Bodies 40, 41 extend along relative axes B parallel to direction A and define therebetween passage 28.

Body 40 is also connected to a plate 39 which is, in turn, fixed to support 29 (Figure 2).

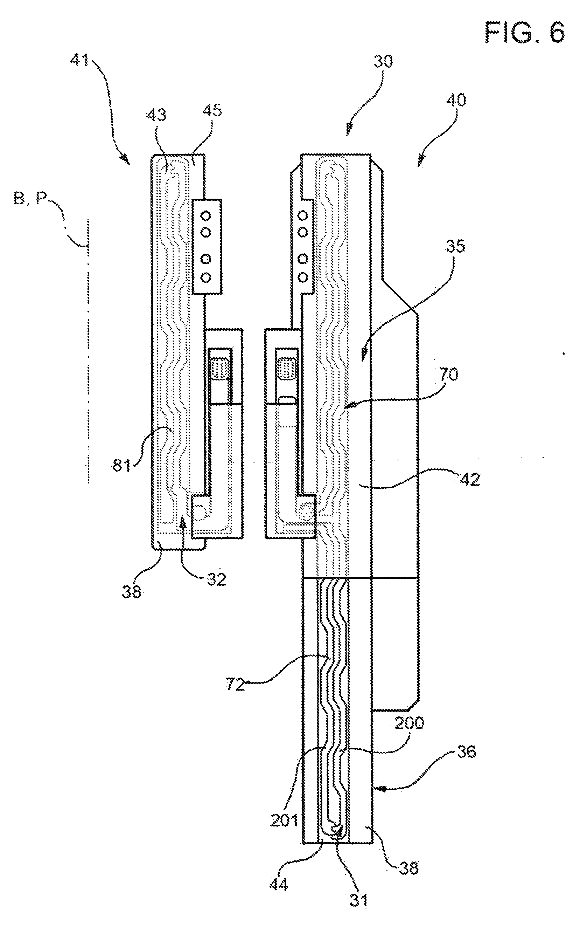

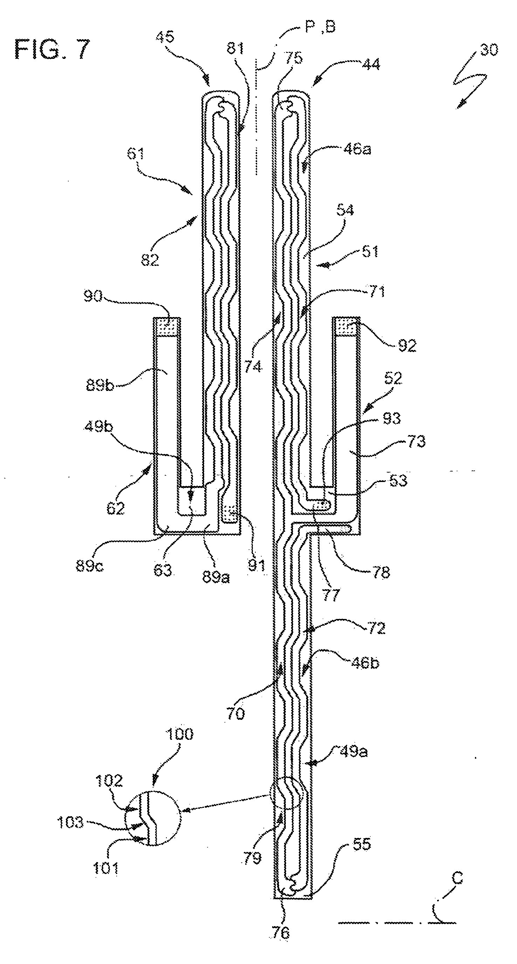

In detail, each body 40, 41 comprises (Figure 6):
- a plastic housing 42, 43;
- an insert 38 of flux concentrating material, for example ferrite; and
- a pair of support 44, 45 for supporting relative inductors 31, 32. Support 44 comprises (Figure 7):
- a top part 46a sandwiched between housing 42 and top part of relative insert 38; and
- a bottom part 46b cooperating, on one side, with a bottom part of relative insert 38.

Support 45 is sandwiched between housing 43 and relative insert 38.

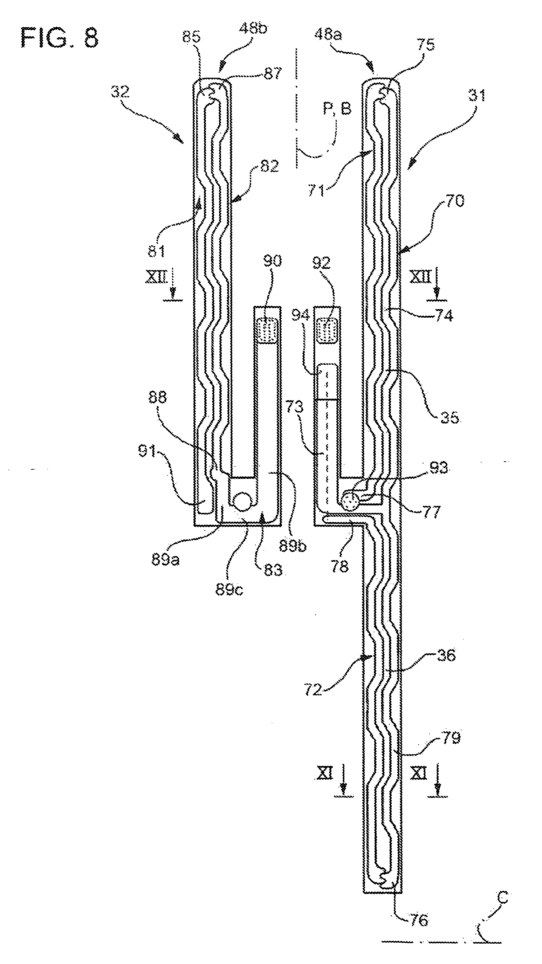

Supports 44; 45 also comprise a pair of faces 48a, 48b; 49a, 49b opposite to each other (Figures 7 and 8).

Faces 48a, 48b are arranged towards the packaging material of tube 10 and have respective upper parts which cooperate with plastic housing 42, 43 (Figure 8).

Faces 49a, 49b are arranged towards insert 38 (Figure 7).

Support 44 substantially comprises (Figure 7):
- a main arm 51 parallel to axis B;
- an arm 52 parallel to arm 51 and axis B, and spaced from arm 51 transversally to relative axis B; and
- a crossbar 53 orthogonal to relative axis B and which extends between arms 51, 52.

Crossbar 53 extends from the middle of arm 51 towards a bottom end of arm 52.

In detail, arm 52 extends upwardly from crossbar 53 and for a length which is less than the half of the length of arm 51 measured along axis B.

Support 45 substantially comprises:
- a main arm 61 parallel to axis B;
- an arm 62 parallel to arm 61 and axis B, and spaced from arm 61 transversally to axis B; and
- a crossbar 63 orthogonal to axis B and which extends between respective arms 61, 62.

Arm 62 protrudes from crossbar 63 on the opposite of arm 61.

In detail, arm 62 extends upwardly from crossbar 63 and for a length which is less than the half of the length of arms 51, 61 measured along axis B.

The length of crossbars 53, 63 measured orthogonally to axis B is substantially identical.

The length of arm 52, 62 measured parallel to axis B is identical. Furthermore, inductors 31, 32 of each pair are embedded between two insulating layers.

Inductor 31 comprises (Figures 7 and 8):
- a serpentine 70 having a pair of opposite ends 75, 76;
- a pair of serpentines 71, 72 starting from ends 75, 76 respectively and having respective end portion 77, 78 opposite to ends 75, 76; and
- a L-shaped portion 73 starting from the middle of serpentine 70.

In detail, a top half 74 of serpentine 70 and serpentine 71 are arranged in top half 54 of arm 51 and form portion 35 of inductor 31.

A bottom half 79 of serpentine 70 and serpentine 72 are arranged in bottom half 55 of arm 51 and form portion 36 of inductor 31.

L-shaped portion 73 is arranged inside crossbar 53 and arm 52 of support 44.

Portion 77, 78 are parallel to each other and are arranged inside crossbar 53.

Bottom half 55 of arm 51 is sloped relative to top half 54 of such arm 51 (Figure 3).

Bottom half 79 of serpentine 70 defines leg 200 and serpentine 72 defines leg 201.

Inductor 32 comprises (Figure 8):
- a serpentine 81 having an end 85; and
- a serpentine 82 which has an end 87 electrically connected to end 85 of serpentine 81 and an end 88 opposite to end 87; and
- a U-shaped portion 83 starting from end 88.

Serpentines 81, 82 are housed within arm 61.

U-shaped portion 83 substantially comprises:
- a stretch 89a parallel to axis B and originating from end 88;
- a stretch 89b parallel to stretch 89a and, therefore, parallel to axis B; and
- a stretch 89c interposed between stretches 89a, 89b and orthogonal to axis B.

Stretches 89a, 89b, 89c are respectively housed inside arm 61, 62 and crossbar 63.

Each serpentine 70, 71, 81, 82 has a length along axis B of relative body 40, 41 and extends, along its length, at varying distances from axis B of relative body 40,41.

Each serpentine 70, 71, 81, 82 comprises a plurality of repeated modules 100 identical and adjacent to each other.

Each module 100 substantially comprises (Figure 7):
- a rectilinear stretch 101 parallel to relative axis B and extending at a first distance from relative axis B;
- a rectilinear stretch 102 parallel to axis B and extending at a second distance, different from the first distance, from relative axis B; and
- a curved stretch 103 interposed between stretches 101, 102.

Stretches 101 of bottom half 79 of serpentine 70 face stretches 101 of serpentine 72.

When sealing device 30 is assembled, arms 52, 62; top half 54 of arm 51 and arm 61; and crossbars 53, 63 face each other from opposite sides of passage 28 along relative direction C. In the same way, serpentine 71, 82; top half 74 of serpentine 70 and serpentine 81; and L- and U-shaped portions 73, 83 face each other from opposite sides of passage 28 along relative direction C.

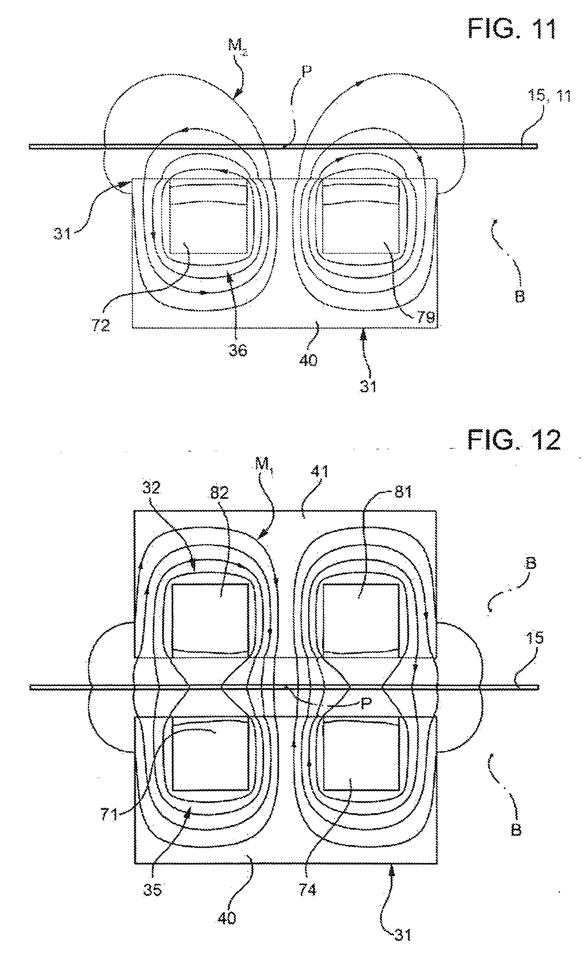

Top half 74 of serpentine 70 and serpentine 81 are arranged on the same side (right side in Figure 12) of serpentines 71, 82 respectively.

Homologous points of top (bottom) half 74 (79) of serpentine 70 and serpentine 71 (72) are arranged at a first constant distance measured along relative direction C from each other.

In the same way, homologous point of serpentines 81, 82 are arranged at the first constant distance measured along relative direction C from each other.

Stretches 101 of leg 200 (201) are arranged at a second distance measured along direction C from stretches 102 of the same leg 200 (201).

The value of this second distance is less than or equal to the first constant distance between legs 200, 201.

As a result, stretches 101 of leg 200 are interposed between stretches 102 of leg 201 parallel to direction B and are aligned with or even arranged on the opposite side of stretches 102 of leg 201 along direction C with respect to stretches 102 of leg 200.

With reference to Figures 7 and 8, inductor 32 comprises:
- an electric contact 90 defined by an end of stretch 89b which is opposite to stretch 89c; and
- an electric contact 91 defined by an end of serpentine 81 opposite to end 85.

Inductor 31 comprises:
- an electric contact 92 defined by an end of L-shaped portion 73 opposite to serpentine 70;
- an electric contact 93 defined by a free end of portion 77; and
- an electric contact 94 electrically connected (as schematically indicated by the dashed line in Figure 8) to a free end of portion 78.

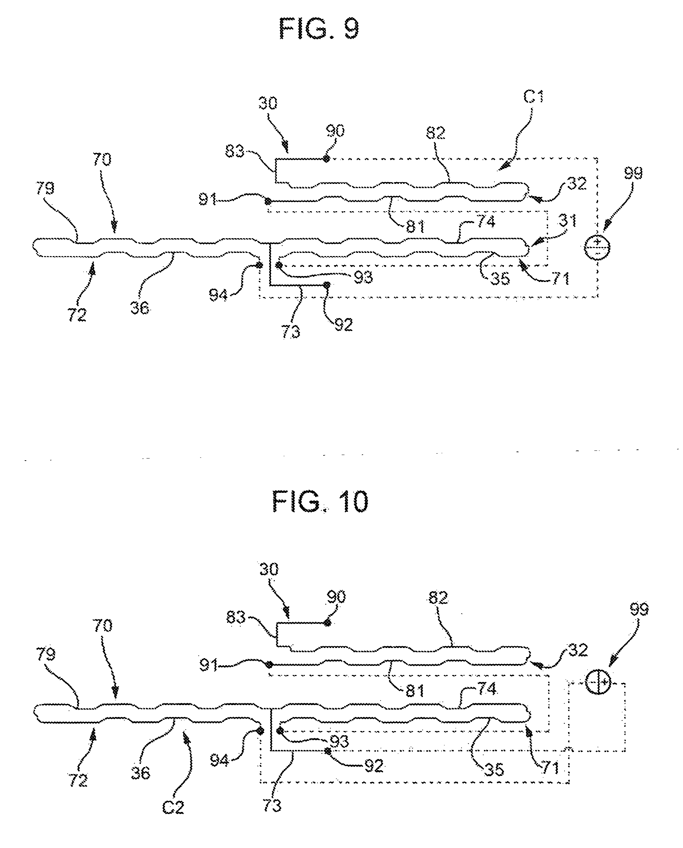

Electric contacts 91, 93 are electrically connected to each other by using a conductive element (only schematically shown in Figures 9 and 10), when sealing device 30 is arranged both in the first and in the second configuration.

Electric contact 94 is electrically connected to a negative pole of a power/current generator 99, when sealing device 30 is arranged both in the first and in the second configuration (Figures 9 and 10).

Electric contact 90 is electrically connected to a positive pole of the power/current generator 99, when sealing device 30 is arranged in the first configuration (Figure 9). Electric contact 90 is left open, when sealing device 30 is arranged in the second configuration.

Electric contact 92 is electrically connected to a positive pole of the power/current generator 99, when sealing device 30 is arranged in the second configuration (Figure 10). Electric contact 92 is left open, when sealing device 30 is arranged in the first configuration.

Electric contacts 94 and 90 or 92 are, in the embodiment shown, electrically connected to the power/current generator 99 by using conductive bars.

When sealing device 30 is in the first configuration (Figure 9), inductors 31, 32 define together with power/current generator 99 a closed electric circuit C1.

In particular, circuit C1 comprises serpentines 70, 71, 72, serpentines 81, 82 and U-shaped portion 83 (Figure 9).

When sealing device 30 is in the second configuration, portion 36 and L-shaped portion 73 of inductor 31 define a closed electric circuit C2 (Figure 10).

In particular, circuit C2 comprises L-shaped portion 73, serpentine 72 and bottom half 79 of serpentine 70.

As a matter of fact, serpentine 71 and top half 74 of serpentine 70 are no longer connected to the positive pole of power/current generator 99 and therefore no alternate current may flow therein.

In the very same way, inductor 32 is no longer electrically connected to the positive pole of power/current generator 99 and therefore no alternate current may flow therein.

When sealing device 30 is set in the first configuration, at a given time, the alternate current flows in the same direction along top half 74 of serpentine 70 and along serpentine 81. Current also flows in the same direction along serpentines 71, 82 (see Figures 11 and 12 where the arrows indicate the sense of the alternate magnetic fields generated by alternate current flowing in circuit C1 at a given time).

In this way, resulting magnetic flux M1 acting onto edge 15 at a given time is not null.

The operation of machine 1 is described starting from a condition in which sealing device 30 and support 29 are in the raised position (Figure 4).

Web 3 is unwound off reel 4 and fed along path P.

More specifically, web 3 is fed by guide members 5 along path P and through successive stations 6, 7, 8.

At station 6, edge 11 is heated, and portion 16 of strip 9 is applied to the face of edge 11 eventually facing inwards of packages 2. Once portion 16 is applied to edge 11, portion 17 projects from edge 11.

Next, web 3 interacts gradually with forming assemblies 13, and is folded to superimpose edges 11, 15 and form tube 10 not yet sealed longitudinally.

More specifically, forming assemblies 13 fold web 3 so that strip 9 is located inside the as yet unsealed tube 10, edge 15 is located radially outwards of edge 11 and portion 17 with respect to the axis of tube 10 still to be sealed longitudinally, and edge 11 is located radially outwards of portion 16 of strip 9.

Seal 14 is formed, in station 8, by sealing to the inner face of edge 15 portion 17 of strip 9 and the face of edge 11 on the opposite side to portion 16.

More precisely, sealing device 30 heats edge 15 to melt the polyethylene layer; heat is transmitted by conduction from edge 15 to edge 11 and strip 9 to melt the polyethylene layer of edge 11 and the heat-seal material of strip 9.

In detail, edge 15 enters passage 28 and remains detached from edge 11 as it travels between inductor 32 and portion 35 of inductor 31.

Edge 15 overlaps edge 11 and strip 9, as it travels in front of portion 36 of inductor 31.

Sealing device 30 is arranged in the first configuration, during the normal operation of machine 1.

In detail, electrical contact 94 is electrically connected to the negative pole of generator 99 and electrical contact 90 is electrically connected to the positive pole of generator 99 (Figure 9).

As a result, closed circuit C1 is formed within inductors 31, 32 and alternate current flows therein.

The alternate current flowing in circuit C1 generates magnetic flux M1 (directed substantially orthogonally to path P) and magnetic flux M2 (directed substantially transversal to path P).

More precisely, leg 200 of portion 36 of inductor 31 induces portion 300 of eddy currents within area 202 to be sealed of edges 11, 15 and strip 9; leg 201 of portion 36 of inductor 31 induces portion 301 of eddy currents within area 202 to be sealed of edges 11, 15 and strip 9.

As a result, substantially the whole eddy current induced by portion 36 of inductor 31 circulates within area 202 (Figure 15).

Next, tube 10 is fed through the circular passage defined by rollers 21, 22. Edges 11, 15 and strip 9 are compressed between rollers 21, 22 to blend the polyethylene layer of edges 11, 15 and the heat-seal material of strip 9, and so form the molecular bonds defining seal 14 of the finished tube 10.

The longitudinally sealed tube 10 is filled continuously with the pourable food product by device 12, and is then fed through the jaw-type forming assembly (not shown) where it is gripped, sealed, and cut along equally spaced cross sections to form a succession of packages 2.

The advantages of sealing device 30 according to the present invention will be clear from the foregoing description.

In particular, leg 200 - formed by bottom half 79 of serpentine 70 - of portion 36 of inductor 31 induces portion 300 of eddy currents within area 202; and leg 201 - formed by serpentine 72 - of portion 36 of inductor 31 induces portion 301 of eddy currents within area 202, as shown in Figure 15.

In this way, substantially the whole eddy currents induced by legs 200, 201 close within area 202 to be sealed of edge 15, 11 and strip 9, thus highly increasing the effectiveness of the sealing carried out by sealing device 30.

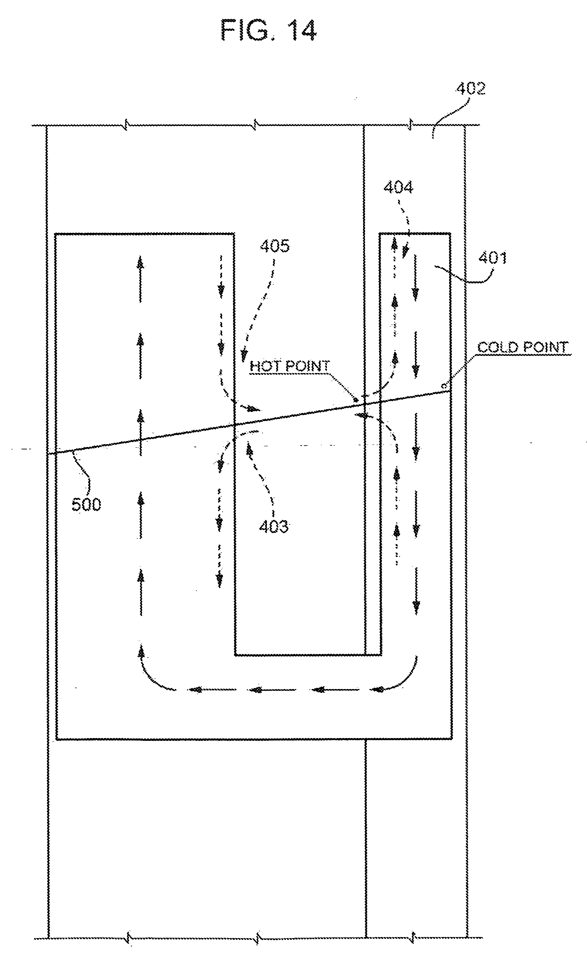

On the contrary, only a part 401 (Figure 14) of the prior art inductors cited in the introductory part of the present description is effective in inducing a part 404 of eddy current 403 (shown with a dashed line in Figure 14) within an area 402 to be sealed of the packaging material. On the contrary, portion 405 of eddy current 403 fails to flow within area 202.

As a result, eddy current 403 tends to close far from area 402 to be sealed in the prior art solution.

Moreover, due to the fact that stretches 101 of leg 200 are aligned with or even arranged on the opposite side of stretches 102 of leg 201 along direction C with respect to stretches 102 of leg 200, stretches 101 of leg 200 are housed within stretches 102 of leg 201 along direction C.

In other words, legs 200, 201 "penetrate" into each other.

Accordingly, the resulting magnetic flux, and therefore the heat pattern, reaches a substantial uniform value on area 200. Such value is enough high to avoid the formation of cold points or channels within area 200.

In this way, the formation of a cold area, and therefore of a non-sealed region between legs 200, 201 is substantially prevented, so ensuring the continuity of seal 14 along direction C.

Furthermore, legs 200, 201 have a length parallel to direction B and are nonsymmetrical relative to direction B, and web 3 of packaging material moves relative to sealing device 30 parallel to direction B.

As a result, as packaging material advances relative to sealing device 30, each point of sealing area 202 is arranged in front of, and is therefore heated by, either of leg 200 or leg 201.

Accordingly, the risk that a cold channel forms along area 202 is dramatically reduced and substantially null.

In this respect, the Applicant has found that hot points are likely to be generated within the area to be sealed of edges 15, 11 and strip instead of outside such an area as in the prior art described in the introductory part of the present description.

The Applicant has also found that sealing device 30 is particularly advantageous in the presence of alluminium layer margins 500 due to the joining of a new reel 4 to an existing reel 4.

In particular, the Applicant has found that the eddy currents tends to circulate very close to the portion of the aluminum margin layers 500 arranged in the sealing zone (Figure 15), instead of circulating at a certain distance from the margin layers, as in the prior art cited in the introductory part of the present description (Figure 14).

Accordingly, the formation of not-sealed region is substantially prevented.

Support 44, 45 and inductors 31, 32 form a printed circuit board. This allows manufacturing inductors 31, 32 shaped in very different way with a reduced impact on manufacturing cost.

Clearly, changes may be made to sealing device 30 as described and illustrated herein without, however, departing from the scope of the present invention as defined in the accompanying Claims.

Sealing device 30, in particular, may also be used in station 6 for sealing portion 16 of strip 9 to the face of edge 11 eventually facing inwards of packages 2.

Sealing device 30 could also comprise only inductor 31.

## Claims

1. A heating induction sealing device (30) for forming a seal (14) in a packaging material (15, 11, 9) comprising an electrically conductive element and advancing, in use, along a first direction (A);
said sealing device (30) comprising at least one inductive element (31);
said inductive element (31) comprising a first and second leg (79, 200; 72, 201) within which said alternate currents flow, in use, in opposite direction;
said first leg (79, 200) being configured to induce, in use, a first portion (300) of an eddy current within an area (202) to be sealed of said packaging material (15, 11, 9);
said second leg (72, 201) facing said first leg (79, 200) along a second direction (C);
said first and second leg (79, 200; 72, 201) having a length in a third direction (B) parallel, in use, to said first direction (A) and transversal to said second direction (C);
**characterized in that** said second leg (72, 201) is configured to induce, in use, a second portion (301) of said eddy current within said area (202) to be sealed of said packaging material (15, 11, 9);
said first and second leg (79, 200; 72, 201) being nonsymmetrical with respect to said third direction (B), so that said seal (14) is formed as continuous along said second direction (C).

2. The sealing device of claim 1, **characterized in that** at least one of said first and second leg (200, 201) is shaped at least in part as a serpentine (79, 72);
said serpentine (79; 72) being elongated along said third direction (B) parallel and extending at varying distances from said third direction (B).

3. The sealing device of claim 2, **characterized in that** said first leg (200) comprises a first serpentine (79) elongated along said third direction (B), and **in that** said second leg (201) comprises a second serpentine (72) elongated along said third direction (B);
said first and second serpentine (79, 72) extending at a first distance measured along said second direction (C).

4. The sealing device of claim 2 or 3, **characterized in that** said first leg (200) comprises said first serpentine (79) and said second leg (201) comprises said second serpentine (72); each said first and second serpentine (79, 72) comprising a plurality of repeated modules (100) identical and adjacent to each other.

5. The sealing device of claim 4, **characterized in that** each module (100) comprises a first and a second rectilinear stretch (101, 102) which extend at relative different distances from said third direction (B).

6. The sealing device of claim 5, when dependent on claim 3, **characterized in that** said first stretches (101) of said first leg (200) face respective first stretches (101) of said second leg (201);
said first and second stretches (101) of each of said first and second leg (200, 201) being arranged at a second distance from each other measured parallel to said second direction (C);
said second distance being equal or less than the maximum value of said first constant distance.

7. The sealing device of claim 5 or 6, **characterized in that** each module (100) comprises at least a curved stretch (103) interposed between said first and second stretch (101, 102).

8. The sealing device of any one of the foregoing claims, **characterized by** comprising a support (44) supporting first and second leg (200, 201), and forming a printed circuit board together with said first and second leg (200, 201).

9. A packaging machine (1) for manufacturing sealed package (2) of a food product pourable into a tube (10) of packaging material, comprising:
- sealing means (30) for applying a strip (9) of a packaging material onto a first edge (11) of said tube (10) and/or for applying a second edge (15) of said tube (10) onto said first edge (11); and
**characterized in that** said sealing means (30) comprise a sealing device (30) according to any one of the foregoing claims.

10. A method of forming a seal (14) in a packaging material (15, 11, 9) comprising an electric conductive material; said seal (14) having a length along a first direction (A);
the method comprising the steps of:
- causing alternate current to flow in opposite directions within a first and a second leg (79, 200; 72, 201) of at least one inductive element (31); and
- inducing, through said first leg (79, 200), a first portion (300) of an eddy current within an area (202) to be sealed of said packaging material (15, 11, 9);
said first and second leg (79, 200; 72, 201) having a length along a third direction (B) parallel to said first direction (A), facing each other along a second direction (C) transversal to said third direction (B), and being nonsymmetrical with respect to said third direction (B);
**characterized by** comprising the steps of:
- inducing, through said second leg (72, 201), a second portion (301) of said eddy current within said area (202) to be sealed of said packaging material (15, 11, 9); and
- forming said seal (14) as continuous along a second direction (C) transversal to said first direction (A), by using said first and second portions (301) of said eddy current.

11. The method of claim 10, **characterized by** comprising the step of continuously feeding said packaging material (15, 11, 9) along a path parallel to said first direction (A), so that said packaging material (15, 11, 9) moves relative to said first and second leg (79, 200; 72, 201) and face said first and second leg (79, 200; 72, 201).

12. The method of claim 10 or 11, **characterized by** comprising the steps of:
- feeding a tube (10) of said packaging material; and
- sealing, through said seal (14), a first and a second edge (11, 15) of said tube (10) along said first direction (A).

13. The method of claim 10 or 11, **characterized by** comprising the step of sealing, through said seal (14), a strip (9) of packaging material onto a first edge (11) of a web (3) of packaging material intended to form a tube (10).

## Patentansprüche

1. Vorrichtung zur Versiegelung durch Induktionserwärmung (30) zum Formen einer Versiegelung (14) in einem Verpackungsmaterial (15, 11, 9), das ein elektrisch leitendes Material enthält und sich im Betrieb entlang einer ersten Richtung (A) vorwärts bewegt;
wobei die Versiegelungsvorrichtung (30) mindestens ein induktives Element (31) enthält;
wobei das induktive Element (31) einen ersten und einen zweiten Schenkel (79, 200; 72, 201) enthält, in denen Wechselströme im Betrieb in entgegengesetzter Richtung fließen;
wobei der erste Schenkel (79, 200) konfiguriert ist, um im Betrieb einen ersten Teil (300) eines Wirbelstroms in einen zu versiegelnden Bereich (202} des Verpackungsmaterials (15, 11, 9) zu induzieren;
wobei der zweite Schenkel (72, 201) dem ersten Schenkel (79, 200) entlang einer zweiten Richtung (C) gegenüber liegt;
wobei der erste und der zweite Schenkel (79, 200; 72, 201) eine Länge in einer dritten Richtung (B) haben, die im Betrieb parallel zur ersten Richtung (A) und quer zur zweiten Richtung (C) ist;
**dadurch gekennzeichnet, dass** der zweite Schenkel (72, 201) konfiguriert ist, um im Betrieb einen zweiten Teil (301) des Wirbelstroms in den zu versiegelnden Bereich (202) des Verpackungsmaterials (15, 11, 9) zu induzieren; wobei der erste und der zweite Schenkel (79, 200; 72, 201) bezüglich der dritten Richtung (B) unsymmetrisch sind, so dass die Versiegelung (14) fortlaufend entlang der zweiten Richtung (C) geformt wird.

2. Versiegelungsvorrichtung nach Anspruch 1, **dadurch gekennzeichnet, dass** mindestens einer der ersten und zweiten Schenkel (200, 201) zumindest zum Teil als eine Serpentine (79, 72) geformt ist;
wobei die Serpentine (79; 72) entlang der dritten Richtung (B) parallel längs verläuft und sich in unterschiedlichen Abständen von der dritten Richtung (B) erstreckt.

3. Versiegelungsvorrichtung nach Anspruch 2, **dadurch gekennzeichnet, dass** der erste Schenkel (200) eine erste Serpentine (79) enthält, die entlang der dritten Richtung (B) längs verläuft, und dass der zweite Schenkel (201) eine zweite Serpentine (72) enthält, die entlang der dritten Richtung (B) längs verläuft;
wobei die erste und die zweite Serpentine (79, 72) sich in einem ersten Abstand gemessen entlang der zweiten Richtung (C) erstrecken.

4. Versiegelungsvorrichtung nach Anspruch 2 oder 3, **dadurch gekennzeichnet, dass** der erste Schenkel (200) die erste Serpentine (79) und der zweite Schenkel (201) die zweite Serpentine (72) enthält; wobei jede erste und zweite Serpentine (79, 72) eine Vielzahl wiederholter Module (100) enthält, die gleich und einander benachbart sind.

5. Versiegelungsvorrichtung nach Anspruch 4, **dadurch gekennzeichnet, dass** jedes Modul (100) eine erste und eine zweite geradlinige Strecke (101, 102) enthält, die sich in unterschiedlichen Abständen von der dritten Richtung (B) erstrecken.

6. Versiegelungsvorrichtung nach Anspruch 5, wenn er von Anspruch 3 abhängt, **dadurch gekennzeichnet, dass** die ersten Strecken (101) des ersten Schenkels (200) ersten Strecken (101) des zweiten Schenkels (201) gegenüber liegen;
wobei die ersten und zweiten Strecken (101) jedes der ersten und zweiten Schenkel (200, 201) in einem zweiten Abstand voneinander angeordnet sind, der parallel zur zweiten Richtung (C) gemessen wird;
wobei der zweite Abstand gleich oder geringer als der maximale Wert des ersten konstanten Abstands ist.

7. Versiegelungsvorrichtung nach Anspruch 5 oder 6, **dadurch gekennzeichnet, dass** jedes Modul (100) mindestens eine gekrümmte Strecke (103) enthält, die zwischen die erste und die zweite Strecke (101, 102) eingefügt ist.

8. Versiegelungsvorrichtung nach einem der vorhergehenden Ansprüche, **dadurch gekennzeichnet, dass** sie einen Träger (44) enthält, der den ersten und den zweiten Schenkel (200, 201) trägt und zusammen mit dem ersten und dem zweiten Schenkel (200, 201) eine Leiterplatte formt.

9. Verpackungsmaschine (1) zur Herstellung einer versiegelten Verpackung (2) eines in einen Schlauch (10) eines Verpackungsmaterials gießbaren Nahrungsmittels, die enthält:
- eine Versiegelungseinrichtung (30) zum Anlegen eines Streifens (9) eines Verpackungsmaterials auf eine erste Kante (11) des Schlauchs (10) und/oder zum Anlegen einer zweiten Kante (15) des Schlauchs (10) auf die erste Kante (11); und
**dadurch gekennzeichnet, dass** die Versiegelungseinrichtung (30) eine Versiegelungsvorrichtung (30) nach einem der vorhergehenden Ansprüche enthält.

10. Verfahren zum Formen einer Versiegelung (14) in einem Verpackungsmaterial (15, 11, 9), das ein elektrisch leitendes Material enthält; wobei die Versiegelung (14) eine Länge entlang einer ersten Richtung (A) hat;
wobei das Verfahren die folgenden Schritte enthält:
- Verursachen des Fließens von Wechselstrom in entgegengesetzte Richtungen innerhalb eines ersten und eines zweiten Schenkels (79, 200; 72, 201) mindestens eines induktiven Elements (31); und
- Induzieren durch den ersten Schenkel (79, 200) eines ersten Teils (300) eines Wirbelstroms in einen zu versiegelnden Bereich (202) des Verpackungsmaterials (15, 11, 9);
wobei der erste und der zweite Schenkel (79, 200; 72, 201) eine Länge entlang einer dritten Richtung (B) parallel zur ersten Richtung (A) haben, einander entlang einer zweiten Richtung (C) quer zur dritten Richtung (B) gegenüber liegen und bezüglich der dritten Richtung (B) unsymmetrisch sind; **dadurch gekennzeichnet, dass** es die folgenden Schritte enthält:
- Induzieren durch den zweiten Schenkel (72, 201) eines zweiten Teils (301) des Wirbelstroms in den zu versiegelnden Bereich (202) des Verpackungsmaterials (15, 11, 9); und
- Formen der Versiegelung (14) fortlaufend entlang einer zweiten Richtung (C) quer zur ersten Richtung (A) durch Verwendung des ersten und des zweiten Teils (301) des Wirbelstroms.

11. Verfahren nach Anspruch 10, **dadurch gekennzeichnet, dass** es den Schritt der fortlaufenden Zuführung des Verpackungsmaterials (15, 11, 9} entlang eines Pfads parallel zur ersten Richtung (A) enthält, so dass das Verpackungsmaterial (15, 11, 9) sich parallel zum ersten und zweiten Schenkel (79, 200; 72, 201) bewegt und dem ersten und dem zweiten Schenkel (79, 200; 72, 201) gegenüber liegt.

12. Verfahren nach Anspruch 10 oder 11, **dadurch gekennzeichnet, dass** es die folgenden Schritte enthält:
- Zufuhr eines Schlauchs (10) des Verpackungsmaterials; und
- Versiegeln, mittels der Versiegelung (14), einer ersten und einer zweiten Kante (11, 15) des Schlauchs (10) entlang der ersten Richtung (A).

13. Verfahren nach Anspruch 10 oder 11, **dadurch gekennzeichnet, dass** es den Schritt der Versiegelung, durch die Versiegelung (14), eines Streifens (9) von Verpackungsmaterial auf eine erste Kante (11) einer Bahn (3) von Verpackungsmaterial enthält, die dazu bestimmt ist, einen Schlauch (10) zu formen.

## Revendications

1. Dispositif de soudage par chauffage à induction (30) destiné à former une soudure (14) sur un matériau de conditionnement (15, 11, 9) comprenant un élément électriquement conducteur et se déplaçant, en utilisation, suivant une première direction (A) ;
ledit dispositif de soudage (30) comprenant au moins un élément d'induction (31) ; ledit élément d'induction (31) comprenant des première et seconde branches (79, 200 ; 72, 201) à l'intérieur desquelles passe, en utilisation, ledit courant alternatif suivant des sens opposés ;
ladite première branche (79, 200) étant configurée de manière à induire, en utilisation, une première partie (300) d'un courant de Foucault à l'intérieur d'une zone (202) à souder dudit matériau de conditionnement (15, 11, 9) ;
ladite seconde branche (72, 201) faisant face à ladite première branche (79, 200) suivant une deuxième direction (C) ;
lesdites première et seconde branches (79, 200 ; 72, 201) présentant une longueur suivant une troisième direction (B) parallèle, en utilisation, à ladite première direction (A) et transversale par rapport à ladite deuxième direction (C) ;
**caractérisé en ce que** ladite seconde branche (72, 201) est configurée de manière à induire, en utilisation, une seconde partie (301) dudit courant de Foucault à l'intérieur de ladite zone (202) à sceller dudit matériau de conditionnement (15, 11, 9) ;
lesdites première et seconde branches (79, 200 ; 72, 201) étant non symétriques par rapport à ladite troisième direction (B), de telle sorte que ladite soudure (14) est formée de manière continue suivant ladite deuxième direction (C).

2. Dispositif de soudage selon la revendication 1, **caractérisé en ce que** au moins l'une desdites première et seconde branches (200, 201) est réalisée au moins en partie sous la forme d'un serpentin (79, 72) ;
ledit serpentin (79 ; 72) s'étendant suivant ladite troisième direction (B) parallèlement et s'étendant à différentes distances par rapport à ladite troisième direction (B).

3. Dispositif de soudage selon la revendication 2, **caractérisé en ce que** ladite première branche (200) comprend un premier serpentin (79) s'étendant suivant ladite troisième direction (B), et **en ce que** ladite seconde branche (201) comprend un second serpentin (72) s'étendant suivant ladite troisième direction (B) ;
lesdits premier et second serpentins (79, 72) s'étendant sur une première distance mesurée suivant ladite deuxième direction (C).

4. Dispositif de soudage selon la revendication 2 ou 3, **caractérisé en ce que** ladite première branche (200) comprend ledit premier serpentin (79) et ladite seconde branche (201) comprend ledit second serpentin (72) ; chacun desdits premier et second serpentins (79, 72) comprenant une pluralité de modules répétitifs (100) identiques et adjacents l'un à l'autre.

5. Dispositif de soudage selon la revendication 4, **caractérisé en ce que** chaque module (100) comprend une première et une seconde bandes rectilignes (101, 102) qui s'étendent à des distances relatives différentes par rapport à ladite troisième direction (B).

6. Dispositif de soudage selon la revendication 5, lorsqu'elle dépend de la revendication 3, **caractérisé en ce que** lesdites première et seconde bandes (101) de ladite première branche ( 200) font respectivement face à des premières bandes (101) de ladite seconde branche (201) ;
lesdites première et seconde bandes (101) de chacune desdites première et seconde branches (200, 201) étant agencées à une seconde distance l'une de l'autre mesurée parallèlement à ladite deuxième direction (C) ;
ladite seconde distance étant inférieure ou égale à la valeur maximum de ladite première distance constante.

7. Dispositif de soudage selon la revendication 5 ou 6, **caractérisé en ce que** chaque module (100) comprend au moins une bande courbe (103) interposée entre lesdites première et seconde bandes (101, 102).

8. Dispositif de soudage selon l'une quelconque des revendications précédentes, **caractérisé par le fait qu'**il comprend un support (44) comprenant des première et seconde branches (200, 201), et formant une plaque de circuit imprimé ensemble avec lesdites première et seconde branches (200, 201).

9. Machine de conditionnement (1) destinée à fabriquer des emballages scellés (2) d'un produit alimentaire fluide dans un tube (10) de matériau de conditionnement, comprenant :
des moyens de soudage (30) destinés à appliquer une bandelette (9) d'un matériau de conditionnement sur un premier bord (11) dudit tube (10) et/ou à appliquer un second bord (15) dudit tube (10) sur ledit premier bord (11) ; et
**caractérisée en ce que** ledit moyen de soudage (30) comprend un dispositif de soudage (30) selon l'une quelconque des revendications précédentes.

10. Procédé de formation d'une soudure (14) sur un matériau de conditionnement (15, 11, 9) comprenant un matériau électriquement conducteur ; ladite soudure (14) présentant une certaine longueur suivant une première direction (A) ;
le procédé comprenant les étapes de :
établissement d'un courant alternatif suivant des sens opposés à l'intérieur d'une première et d'une seconde branches (79, 200 ; 72, 201) d'au moins un élément d'induction (31) ; et
induction, à travers ladite première branche (79, 200), d'une première partie (300) d'un courant de Foucault à l'intérieur d'une zone (202) à souder dudit matériau de conditionnement (15, 11, 9) ;
lesdites première et seconde branches (79, 200 ; 72, 201) présentant une certaine longueur suivant une troisième direction (B) parallèle à ladite première direction (A), se faisant face l'une à l'autre suivant une deuxième direction (C) transversale par rapport à ladite troisième direction (B), et étant asymétriques par rapport à ladite troisième direction (B).
**caractérisé par le fait qu'**il comprend les étapes de :
induction, à travers ladite seconde branche (72, 201), d'une seconde partie (301) dudit courant de Foucault à l'intérieur de ladite zone (202) à sceller dudit matériau de conditionnement (15, 11, 9) ; et
formation de ladite soudure (14) de manière continue suivant une deuxième direction (C) transversale par rapport à ladite première direction (A), en utilisant lesdites première et seconde parties (301) dudit courant de Foucault ;

11. Procédé selon la revendication 10, **caractérisé par le fait qu'**il comprend l'étape d'alimentation en continu dudit matériau de conditionnement (15, 11, 9) suivant un trajet parallèle à ladite première direction (A), de telle sorte que ledit matériau de conditionnement (15, 11, 9) se déplace par rapport auxdites première et seconde branches (79, 200 ; 72, 201) et face auxdites première et seconde branches (79, 200 ; 72, 201).

12. Procédé selon la revendication 10 ou 11, **caractérisé par le fait qu'**il comprend les étapes de :
alimentation d'un tube (10) dudit matériau de conditionnement ; et
soudage, par l'intermédiaire de ladite soudure (14), d'un premier et second bords (11, 15) dudit tube (10) suivant ladite première direction (A).

13. Procédé selon la revendication 10 ou 11, **caractérisé par le fait qu'**il comprend l'étape de soudage, par l'intermédiaire de ladite soudure (14), d'une bandelette (9) de matériau de conditionnement sur un premier bord (11) d'une bande (3) de matériau de conditionnement destinée à former un tube (10).
